# EUROPÄISCHE PATENTSCHRIFT

(11) **EP 3 259 096 B1**
(45) Veröffentlichungstag und Bekanntmachung des Hinweises auf die Patenterteilung: **04.09.2019**
(21) Anmeldenummer: 16708367.4
(22) Anmeldetag: 19.02.2016
(51) Int. Cl.: B23P 21/00, B62D 65/02, G05B 19/418, B23P 23/06

(54) **FERTIGUNGSANLAGE UND FERTIGUNGSVERFAHREN**
PRODUCTION PLANT AND PRODUCTION METHOD
INSTALLATION ET PROCÉDÉ DE FABRICATION

(30) Priorität: 19.02.2015 DE 202015100782 U; 27.11.2015 DE 202015106459 U
(43) Veröffentlichungstag der Anmeldung: 27.12.2017
(73) Patentinhaber: KUKA Systems GmbH, 86165 Augsburg (DE)
(72) Erfinder: THORWARTH, Paul, 86154 Augsburg (DE)
(74) Vertreter: Ernicke, Klaus Stefan
(86) Internationale Anmeldenummer: PCT/EP2016/053562
(87) Internationale Veröffentlichungsnummer: WO 2016/131961

(56) Entgegenhaltungen:
- EP-A1- 1 120 189
- EP-A1- 2 100 804
- DE-A1-102008 009 995
- DE-U1-202005 001 780
- FR-A1- 2 757 819

## Beschreibung

Die Erfindung betrifft eine Fertigungsanlage und ein Verfahren zum Fertigen von Werkstücken mit den Merkmalen im Oberbegriff der Ansprüche 1 und 13.

Eine solche Fertigungsanlage und ein solches Verfahren sind aus der EP 2 100 804 A1 bekannt.

Aus der Praxis sind auch Fertigungsanlagen für den Rohbau von Fahrzeugkarosserien bekannt, bei denen der Fertigungsbereich sich in zwei oder mehr getrennte Linien gliedert, in denen Fertigungszellen fördertechnisch fest miteinander verkettet sind. Die Abfolge der Fertigungsschritte und der daran beteiligten Fertigungszellen ist fest vorgegeben. Der Werkstücktransport von Zelle zu Zelle erfolgt meist über Handlingroboter. Diese Fertigungsanlagen können für verschiedene Typen von Fahrzeugkarosserien flexibel gestaltet werden, wobei die feste Verkettung erhalten bleibt.

Es ist Aufgabe der vorliegenden Erfindung, eine verbesserte Fertigungstechnik aufzuzeigen.

Die Erfindung löst diese Aufgabe mit den Merkmalen in den Vorrichtungs- und Verfahrenshauptansprüchen.

Die beanspruchte automatisierte Fertigungstechnik, d.h. die Fertigungsanlage und das Fertigungsverfahren, haben verschiedene Vorteile.

Die automatisierte Fertigungstechnik zeichnet sich durch eine hohe Flexibilität aus. Die im Fertigungsbereich angeordneten Fertigungseinrichtungen, vorzugsweise in Form von Fertigungszellen, sind selbst hochflexibel und können für unterschiedlichste Applikationen eingesetzt werden. Die hierfür erforderlichen applikationsspezifischen Werkzeuge können in einer externen Bereitstellung vorgehalten und mittels einer Fördereinrichtung bedarfsweise zu den Fertigungseinrichtungen für deren automatische werkzeugtechnische Ausrüstung und Umrüstung gebracht werden. Die gleiche Fördereinrichtung kann auch zum Transport der Werkstücke benutzt werden.

Die automatisierte Fertigungsanlage hat eine flexible und bedarfsweise umgestaltbare fördertechnische Verkettung der Fertigungseinrichtungen einerseits untereinander und andererseits mit Bereitstellungen, insbesondere für verschiedene applikationsspezifische Werkzeuge und für unterschiedliche Werkstücke.

Die applikationsflexiblen Fertigungseinrichtungen und deren Fertigungsgeräte werden von der Fördereinrichtung mit Werkstücken und applikationsspezifischen Werkzeugen versorgt. Sie können durch eine automatische wechselbare Bestückung mit verschiedenen applikationsspezifischen Werkzeugen sowie durch eine Programmänderung an unterschiedliche Applikationen adaptiert werden. Diese Adaptionsmöglichkeit betrifft unterschiedliche Fertigungsprozesse und/oder verschiedene Werkstücke.

In einer Fertigungseinrichtung können durch eine solche Adaption eine große Bandbreite unterschiedlicher Fertigungsprozesse wahlweise durchgeführt werden. Solche Fertigungsprozesse sind z.B. Fügeprozesse, insbesondere Schweiss-, Löt- oder Klebeprozesse, Umformprozesse, Montageprozesse, Auftragprozesse oder dgl.. Die prozess- und werkzeugtechnische Umrüstung kann sehr schnell vonstatten gehen.

Durch eine applikationstechnische Adaption können auch unterschiedliche Werkstücke bearbeitet werden. Die Werkstücke können von beliebiger Art und Grösse sein. Sie können völlig unterschiedlich sein. Sie können auch einander ähnlich sein und sich durch den Typ unterscheiden. Solche Werkstücke können z.B. Seitenwände oder andere Bauteile von Fahrzeugkarosserien sein, die sich in ihrer Gestaltung für unterschiedliche Karosserietypen, z.B. für eine Limousine, ein Coupe, einen Transporter oder dergleichen unterscheiden.

Die hochflexible Fördereinrichtung umfasst erfindungsgemäß eine Vielzahl von autonomen und individuell steuerbaren Fördermitteln, die sich auf einer Vielzahl von verschiedenen Förderwegen bewegen. Erfindungsgemäß ist ein Netz von Förderwegen vorhanden, auf denen die Fördermittel auf vorgegebenen Förderbahnen zwischen den Fertigungseinrichtungen und den Bereitstellungen verkehren, wobei die Förderbahnen frei wählbar und programmierbar sind. Die Fördereinrichtung ist außerdem hinsichtlich der Transportmöglichkeiten für applikationsspezifische Werkzeuge und für Werkstücke flexibel.

Hierfür sind adaptierte Lastaufnahmemittel vorgesehen. In Adaption an unterschiedliche Typen von Werkstücken und/oder Werkzeugen können mehrere unterschiedliche Typen (A,B,C,D) von Lastaufnahmemitteln vorhanden sein. Diese können ggf. mittels einer mitgeführten und erfassbaren Typenkennung unterschieden werden. Die Typenkennung kann zur Prozessanpassung in einer Fertigungseinrichtung genutzt werden. Die Lastaufnahmemittel können mit den Fördermitteln fest oder wechselbar verbunden sein.

Die Fördermittel und/oder die Lastaufnahmemittel können ebenfalls in einer oder mehreren Bereitstellungen magaziniert werden und bei Bedarf abgerufen und eingesetzt werden.

Die verschiedenen Bereitstellungen für applikationsspezifische Werkzeuge, für Werkstücke und für Lastaufnahmemittel können untereinander gleichartig ausgebildet sein und weisen einen Lagerbereich und einen mit der Fördereinrichtung verbundenen Beladebereich sowie eine Beladeeinrichtung, vorzugsweise ein oder mehrere Handlingroboter, auf.

Die Fertigungseinrichtungen sind bevorzugt inselartig verteilt im Fertigungsbereich angeordnet und werden mehrseitig, vorzugsweise allseitig, von Förderwegen umgeben. Ein Förderweg führt erfindungsgemäß dabei in und vorzugsweise durch eine Fertigungseinrichtung. Die Fördermittel mit den applikationsspezifischen Werkzeugen und/oder den Werkstücken können dadurch direkt in die Fertigungseinrichtung und zur dortigen Arbeitsstelle gebracht werden.

Der Förderweg erstreckt sich bevorzugt durch die Arbeitsstelle. Der Förderweg kann nur in einer oder bevorzugt in beiden Richtungen von einem Fördermittel befahren werden. Auf dem Förderweg können Fördermittel Werkstücke und/oder Werkzeuge der Arbeitsstelle zuführen und von dort wieder abführen oder auch durch die Fertigungseinrichtung hindurch transportieren. Die Fördermittel können die Fertigungseinrichtung auch zu anderen Zwecken durchqueren. Ein durchgängiger Förderweg kann für eine Verkettung von mehreren Fertigungseinrichtungen genutzt werden.

Der Förderweg ist vorzugsweise bodennah, insbesondere flurgebunden, angeordnet. Auf dem Förderweg verkehren ebenfalls bevorzugt flurgebundene Fördermittel, vorzugsweise autonome Fahrzeuge. Sie sind individuell steuerbar und ggf. lenkbar.

Die Bearbeitung der Werkstücke und die Werkzeugbestückung kann durch verteilt angeordnete, applikationsflexible Fertigungsgeräte, insbesondere Roboter, erfolgen. Die Fertigungsgeräte können auch die werkzeugtechnische Umrüstung ausführen. Die immer wieder im Fertigungsablauf benötigten applikationsspezifischen Werkzeuge können in ein oder mehreren Speichern, insbesondere Drehspeichern bevorratet und bei Bedarf von dem Fertigungsgerät benutzt und getauscht werden. Solche applikationsspezifischen Werkzeuge können z.B. Handhabungs- insbesondere Greifwerkzeuge sein, die an unterschiedliche Werkstücke adaptiert sind. Andererseits können verschiedene Prozesswerkzeuge, insbesondere Fügewerkzeuge, Umformwerkzeuge oder dgl. für die oben genannten unterschiedlichen Prozesse, vorhanden sein.

Die Werkstückbearbeitung kann auf dem Lastaufnahmemittel stattfinden, das hierfür in geeigneter Weise mitsamt Werkstück in einer vorgegebenen Position positioniert werden kann. Das Lastaufnahmemittel kann dabei mit dem Fördermittel verbunden bleiben oder von diesem getrennt werden. Eine Werkstückbearbeitung kann auch losgelöst vom Lastaufnahmemittel erfolgen, wobei z.B. ein Handlingroboter mit seinem Greifwerkzeug ein oder mehrere Werkstücke in einer Schwebelage für die Bearbeitung mit ein oder mehreren anderen Robotern hält. Ein Werkstück kann auch auf einer Ablage nahe der Arbeitsstelle, z.B. direkt über der Arbeitsstelle abgelegt werden. Dies ermöglicht einen Wechsel des Lastaufnahme- und Fördermittels während der Werkstückbearbeitung, was zu unterschiedlichen Zwecken genutzt werden kann.

Günstig ist dabei außerdem, wenn mehrere adaptierte Lastaufnahmemittel für Werkstücke vorhanden sind. Die Lastaufnahmemittel können in unterschiedlichen Typen vorliegen, die ihrerseits an unterschiedliche Werkstücktypen angepasst sind. Die Lastaufnahmemittel können einem Fördermittel in die Fertigungseinrichtung gebracht und abtransportiert werden. Das Fördermittel und die Fördereinrichtung können gemäß der Ausführungsbeispiele ausgebildet sein.

Die weitere Fertigungseinrichtung dient als verlängerte Werkbank. Hier können z.B. Prozesse durchgeführt werden, die in der applikationsflexiblen Fertigungseinrichtung nicht oder nur schwer machbar sind. Mehrere weitere Fertigungseinrichtung können in einer Quadranten-Matrix mit der primären Fertigungseinrichtung verbunden sein. Zudem kann durch eine Diversifizierung und eine gleichzeitige Durchführung mehrerer Prozesse Taktzeit gespart und die Fertigungsleistung erhöht werden. Der Werkstückwechsel kann über Schnittstellen am Randbereich der Fertigungseinrichtungen erfolgen. Die Schnittstellen können sich an einer die jeweilige Fertigungseinrichtung umgebenden Schutzabtrennung befinden. Die auf dem Förderweg befindlichen Schnittstellen können als Schleusen für leere und beladene Fördermittel in der Schutzabtrennung ausgebildet sein.

Die automatische Fertigungstechnik hat die folgenden Charakteristika und Vorteile.
Eine applikationsneutrale Grundausrüstung einer Fertigungseinrichtung, insbesondere Fertigungsgeräte, werden nach einem erstelltem Plan durch applikationsspezifische Werkzeuge und ggf. weiteres Equipment ergänzt und an die jeweilige Applikation adaptiert. Nach dieser Kombination ist die Fertigungsanlage produktionsbereit.

Durch Speicher, insbesondere Werkzeugmagazine, innerhalb der Fertigungseinrichtung können auch applikationsspezifische Werkzeugsätze übergeben werden, die eine spezifische Fertigungssequenz am gleichen Werkstück zulassen oder auch die Produktion in einem Typenmix. Ferner ist eine Fertigung unterschiedlicher Werkstücke, wie z.B. Bodenteile und Seitenwände von Fahrzeugkarosserien im chaotischen Mix möglich.

Durch das Verteilen der für die Fertigung erforderlichen applikationsspezifischen Werkzeuge oder Werkzeugsätze auf eine unterschiedliche Anzahl von Fertigungseinrichtungen können die Fertigungszeiten variabel geplant werden. Die gesamte Fertigung kann auf eine einzige Fertigungseinrichtung fokusiert werden, wenn man Werkzeuge und Werkstücke in geeigneter Sequenz einbringt bzw. bearbeitet.

Die zu verarbeitenden Werkstücke werden ebenfalls mit dem Fördermittel in die fertigungsbereiten Fertigungseinrichtungen eingefahren und verarbeitet. Das bearbeitete und/oder gefügte Werkstück wird in Sequenz nach einem vorher definierten Pfad bzw. einer Förderbahn durch eine Reihe von Fertigungseinrichtungen transportiert. Das Lastaufnahmemittel (LAM) nimmt die für den Fertigungsprozess erforderlichen Werkstücke oder Werkstückteile, wie auch das durch den in der Fertigungseinrichtung erfolgten Prozess bearbeitete Werkstück auf. Die gesamte Fertigungssequenz kann unterschiedliche Lastaufnahmemittel erfordern.

Jeder Typ von Lastaufnahmemittel kann in einem geschlossenen Loop transportiert werden. Um das gefertigte Werkstück von Loop A auf Loop B zu übergeben, gibt es Fertigungseinrichtungen, die von LAM "A" und LAM "B" in direkter Folge durchfahren werden. Dabei wird das Werkstück von Loop "A" in der Fertigungseinrichtung entnommen und schwebend gehalten oder auf einer Ablage abgelegt sowie ggf. bearbeitet. Das leere Fördermittel verlässt die Fertigungseinrichtung. Danach fährt ein anderes Fördermittel des Loops "B" ein. Nach erfolgtem Prozess wird das Produktionsteil auf das Fördermittel des Loops "B" zum Weitertransport gelegt. Durch eine entsprechende Anzahl von solchen Übergaben ist die verbindende Fördertechnik durch den gesamten Produktionsprozess sicher gestellt.

Die Werkstücke können auch mit mehr als einem Fördermittel in Sequenz in die Fertigungseinrichtung eingefahren werden. So ist es möglich, dass im ersten Step ein Fördermittel, insbesondere Anbauteile, in die Fertigungseinrichtung einfährt, die Werkstücke dort von Robotern entnommen werden und an eine Karosserie gefügt werden, die auf einem zweiten Fördermittel - z.B. auf einer Spannpalette liegend - zugeführt wird. Dies ist beispielsweise vorteilhaft bei einem automatisierten Anbau von Türen und Klappen oder beim Fügen der Seitenwände und Dachquerträger an einen Fahrzeugunterbau.

Das Konzept lässt es zu, dass ein und dieselbe Fertigungseinrichtung innerhalb des Fertigungsverfahrens mehrfach beteiligt ist. Auch ist es möglich, ein und die selbe Fertigungseinrichtung von zwei oder mehr unterschiedlichen, aber synchron laufenden Fertigungsverfahren zu nutzen.

Die applikationsspezifischen Werkzeuge können zu Wartungs- bzw Instandhaltungszwecken bei Bedarf in einen Toolstore verbracht werden. Damit ist eine konzentrierte Wartung aufgrund optimaler Zugänglichkeit und geeigneter Resourcen sichergestellt. Die Wartungsbelange werden sinnvollerweise ganzheitlich durch eine Werkzeug-/Managementsoftware gesteuert, die eine Schnittstelle zur Anlagensteuerung besitzt.

Die Typerkennung der LAMs A,B,C,D kann auf unterschiedliche Weise, z.B. durch eine mitgeführte Kennung, erfolgen. Die Kennung kann in oder vor einer Fertigungseinrichtung erfasst werden. Alternativ oder zusätzlich kann eine Typerkennung durch eine steuerungstechnische Kommunikation und durch Meldungsübermittlung erfolgen. Durch die Typerkennung eines LAM kann auch das Werkstück bzw. sein Typ identifiziert werden.

In den Unteransprüchen sind weitere vorteilhafte Ausgestaltungen der Erfindung angegeben.

Günstig sind ferner folgende Ausgestaltungen, die einzeln oder in Kombination eingesetzt werden können.
Die Fertigungseinrichtungen können im Fertigungsbereich in einer gleichmäßigen, bevorzugt kartesischen, Matrix verteilt angeordnet sein.
Der Fertigungsbereich und die Bereitstellungen können räumlich getrennt voneinander angeordnet sein.
Eine Fertigungseinrichtung kann eine umgebende Schutzabtrennung und eine Schleuse für ein Fördermittel aufweisen.
Eine Beladeeinrichtung einer Bereitstellung für Werkstücke und/oder für Werkzeuge kann einen oder mehrere Handlingroboter aufweisen.
Ein Lastaufnahmemittel kann flexibel und unterschiedlich adaptierbar ausgebildet sein.

Die Erfindung ist in den Zeichnungen beispielhaft und schematisch dargestellt. Im Einzelnen zeigen
- Figur 1:: eine Schemadarstellung einer Fertigungsanlage mit einem Fertigungsbereich und mehreren Bereitstellungen,
- Figur 2:: eine Schemadarstellung einer Steuerungshierarchie,
- Figur 3:: eine Schemadarstellung einer Fertigungseinrichtung,
- Figur 4:: eine beispielhafte Darstellung eines Fertigungsbereichs mit mehreren Fertigungseinrichtungen und Bereitstellungen,
- Figur 5:: ein anderes Beispiel eines Fertigungsbereichs mit Bereitstellungen für die werkzeugtechnische Aus- und Umrüstung von Fertigungseinrichtungen,
- Figur 6:: eine andere ausschnittsweise Darstellung des Fertigungsbereichs von Figur 5 für den Bearbeitungsbetrieb mit einer Bereitstellung für Werkstücke,
- Figur 7:: eine Variante einer Fertigungsanlage und
- Figur 8:: eine weitere Variante einer Fertigungsanlage.

Die Erfindung betrifft eine Fertigungsanlage (1) und ein Fertigungsverfahren für Werkstücke (2).

Die Fertigungsanlage (1) und ihre Komponenten, insbesondere die Fertigungseinrichtungen (18-22), sind automatisiert und programmgesteuert.

Die Werkstücke (2) können von beliebiger Art und Größe sein. Sie können einteilig oder mehrteilig sein. Vorzugsweise handelt es sich um Karosseriebauteile von Fahrzeugkarosserien. Die Fertigungsanlage (1) kann z.B. für den Rohbau von Fahrzeugkarosserien eingesetzt werden.

Die Werkstücke (2) können gleich oder bevorzugt unterschiedlich sein. Die Unterschiede können fundamental sein und z.B. in der Art und Größe bestehen. Andererseits können graduelle Unterschiede, z.B. Typunterschiede bestehen, insbesondere bei Karosseriebauteilen. Hierbei sind mehrere Werkstücke (2) untereinander ähnlich, wobei sie z.B. Seitenwände einer Fahrzeugkarosserie darstellen, und sich hinsichtlich des Fahrzeugtyps, z.B. Limousine mit zwei oder vier Türen, Cabriolet, Caravan etc., unterscheiden.

Im Zuge des automatischen Fertigungsverfahrens können ein oder mehrere Werkstücke (2) in einer Folge von Fertigungsschritten mit unterschiedlichen Fertigungsprozessen bearbeitet werden. Die Fertigungsschritte werden bevorzugt in mehreren Fertigungseinrichtungen (18-22) durchgeführt. Alternativ können sie in einer einzelnen Fertigungseinrichtung (18-22) erfolgen.

Die Zahl der Fertigungsschritten richtet sich nach dem Prozessvolumen, der Auslastung, Taktvorgaben und anderen Kriterien. Hierbei wird z.B. im Rohbau durch Assemblieren und Fügen von Werkstückteilen ein Fertigungs-Produkt, insbesondere eine Karosserie-Baugruppe, erzeugt. Dies kann ein Zwischenprodukt sein, aus dem mit weiteren Prozessen, z.B. Verbindung mit weiteren Werkstückteilen oder anderweitig gefertigten Zwischenprodukten, ein Endprodukt erzeugt wird. Die Fertigungsschritte werden bevorzugt in einer Abfolge nacheinander in mehreren Fertigungseinrichtungen (18-22) durchgeführt. Hierbei werden in einem Fertigungsschritt jeweils ein oder mehrere Prozess-Segmente ausgeführt.

Diese Fertigungsprozesse können unterschiedliche Techniken betreffen, z.B. Fügen, insbesondere Schweissen, Löten oder Kleben, Auftragen und Abtragen von Materialien, Wärmebehandlungen, Umformen, spanabhebende Bearbeitung, Assemblier- und Montagevorgänge oder dgl.. Ferner können die Fertigungsprozesse gleiche oder unterschiedliche Werkstücke (2), insbesondere Werkstücktypen, betreffen.

Die Fertigungsanlage (1), das Fertigungsverfahren und die Fertigungseinrichtungen (18-22) sind flexibel und applikationsspezifisch adaptierbar. Mit einer Applikationsspezifizierung wird eine Anpassung an unterschiedliche Fertigungsprozesse und/oder an unterschiedliche Werkstücke (2) bezeichnet.

Für diese verschiedenen Prozesse werden verschiedene applikationsspezifische Werkzeuge (8) benötigt. Diese Werkzeuge (8) können sich untereinander hinsichtlich der vorgenannten unterschiedlichen Prozesse unterscheiden. In prozesstechnischer Hinsicht gleichartige Werkzeuge (8) können sich auch in der Adaption an unterschiedliche Werkstücke (2) unterscheiden. Die applikationsspezifischen Werkzeuge (8) können Einzelwerkzeuge oder Satzwerkzeuge sein.

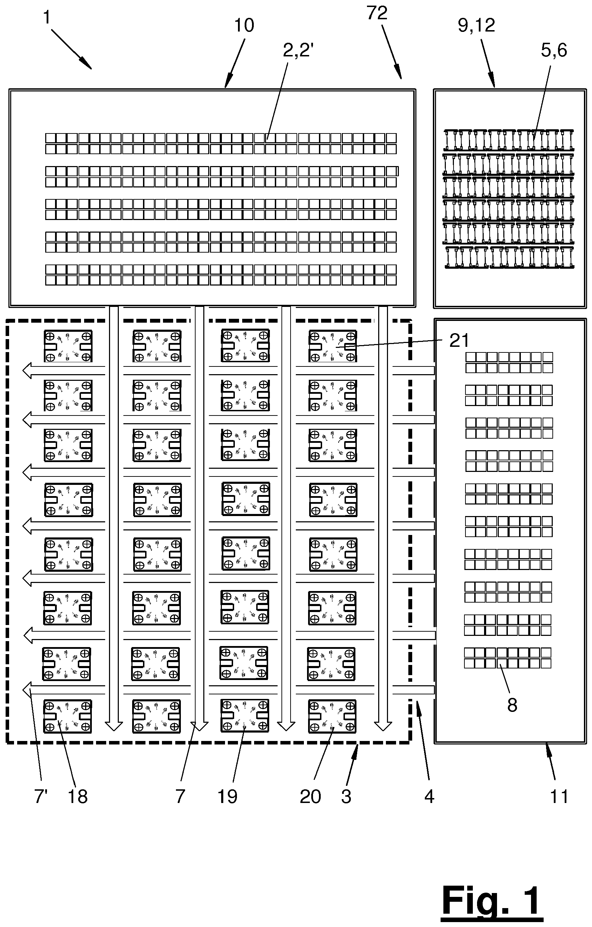

Nachfolgend werden die applikationsspezifischen Werkzeuge (8) der Einfachheit halber als Werkzeuge (8) bezeichnet. Figur 1 zeigt eine Schemadarstellung einer Fertigungsanlage (1) und ihrer Komponenten. Die Fertigungsanlage (1) weist einen Fertigungsbereich (3) mit mehreren darin angeordneten Fertigungseinrichtungen (18-22) auf. Ferner besitzt die Fertigungsanlage (1) einen Logistikbereich (72). Dieser weist eine Bereitstellung (10) für Werkstücke (2) und eine Bereitstellung (11) für verschiedene besagte Werkzeuge (8) auf. Die Bereitstellungen (10,11) werden auch als Warehouse (10) und als Toolstore (11) bezeichnet.

Ferner ist eine Fördereinrichtung (4) vorhanden, welche die Fertigungseinrichtungen (18-22) untereinander und mit den bevorzugt externen Bereitstellungen (10,11) flexibel verbindet.

In den gezeigten Ausführungsformen weist sie eine Vielzahl von Fördermitteln (5) sowie eine Vielzahl von Förderwegen (7,7') auf, auf denen die Fördermittel (5) verkehren. Die Förderwege (7) sind erfindungsgemäß in einem Netz angeordnet.

Ein Förderweg (7) kann sich jeweils durch eine Fertigungseinrichtung (18-22) hindurch erstrecken. Mehrere durchgängige Förderwege (7) können aneinander anschließen und zusammen eine Förderlinie (70) bilden.

Die Fördermittel (5) sind autonom und individuell steuerbar sowie ggf. lenkbar. Sie sind z.B. als flurgebundene fahrerlose Transportfahrzeuge, sog. AGV oder FTF, ausgebildet. Sie können Kurven fahren oder ggf. auch auf der Stelle wenden. Sie können sich ggf. auch omnidirektional bewegen, z.B. mittels Mecanum-Rädern. Alternativ können die Fördermittel (5) hängend angeordnet sein und z.B. an aufgeständerten Förderschienen mit Weichen fahren. Die Fördereinrichtung (4) kann mehrere unterschiedliche Fördermittel (5) aufweisen.

Die Fördermittel (5) verkehren erfindungsgemäß im Netz der Förderwege (7,7') und Förderlinien (70,71) auf frei programmierbaren Förderbahnen. Die Förderlinien (70,71) können in entgegen gesetzten Richtungen befahren werden. Sie können auch als Einbahnstraßen mit entgegengesetzter und durch Pfeile angedeuteter Fahrtrichtung ausgebildet sein. Durch die Querverbindungen, insbesondere den oder die Zufahrtskorridore (66), können Förderloops (48,49) gebildet werden, die auch Fertigungsloops unter Verkettung von mehreren Fertigungseinrichtungen (18-22) schaffen. Die Fertigungs- bzw. Förderloops (48,49) können einander überschneiden.

An den ein oder mehreren Zufahrtskorridoren (66) können die Fördermittel (5) wahlweise entlang des Förderwegs (7) bzw. der Förderlinie (70) von einer in die andere Fertigungseinrichtung (18-22) weiterfahren oder auf der Querverbindung abbiegen und zu einer anderen Förderlinie (71) fahren. Das Abbiegen kann durch eine eigene Lenkbewegung des Fördermittels (5), durch Umsetzen mittels einer Drehscheibe oder auf andere Weise erfolgen.
Im Zufahrtskorridor (66) bzw. der Querverbindung kann ein Parkbereich (53) für das temporäre Abstellen eines leeren oder beladenen Fördermittels (5) gebildet werden. Hierdurch können Pufferspeicher für die Kompensation von Taktzeitunterschieden oder Störungsphasen oder auch für eine Sequenzheilung oder andere Zwecke gebildet werden. Die Fördermittel (5) haben in den verschiedenen Ausführungsformen jeweils einen eigenen individuell steuerbaren Antrieb und eine eigene programmierbare Steuerung. Die Energieversorgung kann auf beliebig geeignete Weise erfolgen, z.B. durch eine stationäre oder instationäre Energieversorgungseinrichtung (33). Dies kann eine Energieladestrecke, z.B. eine induktive oder konduktive Stromzuführung sein, die an ein oder mehreren geeigneten Stellen in der Fertigungsanlage (1), z.B. an einer Bereitstellung (10,11) oder einer Fertigungseinrichtung (18-22) angeordnet ist.

Für den Transport von Werkstücken (2) und/oder Werkzeugen (8) von den Bereitstellungen (10,11) zum Fertigungsbereich (3) und zurück sowie im Fertigungsbereich (3) zwischen den Fertigungseinrichtungen (18-22) tragen die Fördermittel (5) jeweils ein oder mehrere adaptierte Lastaufnahmemittel (6). Diese werden nachfolgend als LAM bezeichnet.

Die LAM (6) können fest oder wechselbar auf einem Fördermittel (5) angeordnet sein. Die LAM (6) können eine feste Adaption für bestimmte Werkstücke (2) und/oder Werkzeuge (8) aufweisen. Sie können alternativ flexibel bzw. verstellbar und unterschiedlich adaptierbar ausgebildet sein. Die LAM (6) können unterschiedliche Aufnahmen und Haltemittel für die Werkstücke (2) und/oder Werkzeuge (8) aufweisen und diese in einer definierten Position halten. Dies ermöglicht eine automatische Übergabe und Übernahme von Werkstücken (2) und Werkzeugen (8). Die LAM (6) können z.B. als Basis einen platten- oder rahmenförmigen Träger aufweisen.

Mehrere LAM (6) sind verschiedenartig ausgebildet und bilden verschiedene Typen (A,B,C,D). Sie können dabei an unterschiedliche Werkstücke (2) adaptiert sein. Ein verstellbares LAM (6) kann zwei oder mehr verschiedene Typen bilden. Die Zahl der verschiedenen LAM-Typen (A,B,C,D) kann beliebig hoch sein. Sie beträgt zwei, drei, vier oder mehr. Die Zahl kann von dem in der Fertigungsanlage (1) zu fertigenden Prozessvolumen abhängen, insbesondere von der Zahl der unterschiedlichen Werkstücke (2). Für die Werkzeuge (8) können weitere LAM-Typen vorhanden sein.

Die typverschiedenen LAM (6) haben eine Typkennung für ihren jeweiligen Typ (A,B,C,D), die von einer Erfassungseinrichtung an den Fertigungseinrichtungen (18-22) detektiert und erkannt werden kann. Die Typkennung kann informations- und steuertechnisch mit einem bestimmten Werkstück (2) verknüpft sein und kann die Art des Werkstücks (2) und/oder Werkzeugs (8) repräsentieren.

Die Fertigungsanlage (1) weist eine mit der Fördereinrichtung (4) verbundene Bereitstellung (9) für die verschiedenen LAM (6) auf. Die LAM (6) können bei einer festen Verbindung mitsamt ihres Fördermittels (5) in der Bereitstellung (9) bevorratet werden. Bei einer lösbaren Verbindung können die LAM (6) für sich in der Bereitstellung (9) und die hiervon getrennten Fördermittel (5) in einer separaten Bereitstellung (12) bevorratet werden.

Der Fertigungsbereich (3) und die Bereitstellungen (9-12) können jeweils einzeln oder mehrfach vorhanden sein. Die Bereitstellungen (9-12) sind vorzugsweise getrennt voneinander angeordnet. Sie können sich innerhalb oder vorzugsweise außerhalb des Fertigungsbereichs (3) befinden.

Die Bereitstellungen (9,10,11) können gleichartig ausgebildet sein. Eine solche Bereitstellung (9,10,11) kann z.B. einen Lagerbereich (32) für Werkstücke (2) und/oder Werkzeuge (8) und/oder LAM (6) und einen mit der Fördereinrichtung (4) verbundenen Beladebereich (30) mit einer Beladeeinrichtung (31) aufweist. Die Beladeeinrichtung (31) umfasst z.B. einen oder mehrere Laderoboter, die stationär angeordnet sind oder mittels einer Fahrachse entlange eines einzelnen oder einer Reihe von Fördermitteln (5) mit LAM (6) verfahrbar angeordnet sind.

Im Fertigungsbereich (3) sind die mehreren Fertigungseinrichtungen (18-22) in einer linienförmigen oder flächigen Verteilung angeordnet. Vorzugsweise sind die Fertigungseinrichtungen (18-22) in einer gleichmäßigen, insbesondere kartesischen Matrix verteilt angeordnet. Die Fördereinrichtung (4) ist dafür ausgelegt, zumindest einen Typ, insbesondere alle Typen (A,B,C,D), von LAM (6) auf den Förderwegen (7,7') und den Förderlinien (70,71) zu und von der oder den Fertigungseinrichtungen (18-22) zu verlagern.

Die Fertigungseinrichtungen (18-22) können mehrseitig von Förderwegen (7) umgeben sein. Ein Förderweg (7) erstreckt sich jeweils in und bevorzugt durch eine Fertigungseinrichtung (18-22). Die Fördermittel (5) mit den LAM (6) können dadurch in und vorzugsweise durch die einzelnen Fertigungseinrichtungen (18-22) fahren.

Die Fertigungseinrichtungen (18-22) sind im Fertigungsbereich vorzugsweise inselartig und mit gegenseitigem Abstand angeordnet. Sie sind dabei allseitig von Förderwegen (7) umgeben. Vorzugsweise sind die Fertigungseinrichtungen (18-22) in einer gleichmäßigen, insbesondere kartesischen Matrix verteilt angeordnet.

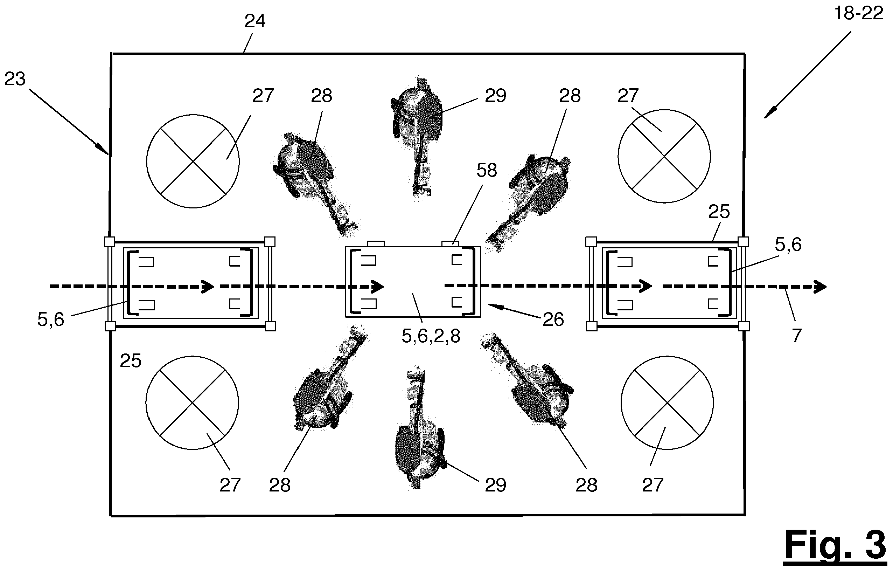

Zumindest mehrere Fertigungseinrichtungen (18-22) sind untereinander gleich ausgebildet. Vorzugsweise sind sie als Fertigungszellen (23) gestaltet. Alternativ ist eine andere Ausbildung möglich. In Figur 3 ist eine zellenartige Fertigungseinrichtung (18-22) beispielhaft dargestellt.

Die gezeigte Fertigungseinrichtung (18-22), insbesondere Fertigungszelle (23), arbeitet automatisch. Sie weist eine einzelne, bevorzugt zentrale Arbeitsstelle (26) und mehrere applikationsflexible Fertigungsgeräte (28,29) auf. Alternativ können mehrere Arbeitsstellen (26) vorhanden sein. Die Arbeitsstelle(n) (26) kann zur sequenziellen Aufnahme von zumindest zwei verschiedenartigen bzw. typverschiedenen LAM (6) und des jeweils mitgeführten Werkstücks (2) und/oder Werkzeugs (8) dienen.

Die Fertigungseinrichtung (18-22) und ihre Fertigungsgeräte (28,29) sowie evtl. weitere Einrichtungskomponenten haben eine applikationsneutrale Grundausbildung und werden durch Bestückung mit applikationsspezifischen Werkzeugen (8) und durch Umprogrammierung an die jeweilige Applikation adaptiert. Durch diese Grundausbildung und die Bestückungs- und Adaptionsmöglichkeit sind sie applikationsflexibel.

Die Arbeitsstelle (26) befindet sich auf einem vorzugsweise geraden Förderweg (7). Dieser Förderweg (7) kann nur in einer oder bevorzugt in beiden Richtungen befahren werden. Die Fertigungseinrichtung (18-22) weist an der Arbeitsstelle (26) eine in Figur 3 schematisch angedeutete Positioniereinrichtung (58) zur prozessgerechten Positionierung des LAM (6) und/oder des Fördermittels (5) auf. Hiermit erfolgt auch eine exakte Positionierung von ein oder mehreren mitgeführten Werkstücken (2) und/oder von ein oder mehreren mitgeführten Werkzeugen (8).

Die Positioniereinrichtung (58) kann mechanisch auf das LAM (6) und/oder das Fördermittel (5) einwirken. In anderen Ausführungsvarianten kann eine Positioniereinrichtung (58) von taktil oder berührungslos erfassbaren Markierungen im Bereich des Förderwegs (7) gebildet werden, die vom Fördermittel (5) erfasst und für dessen programmgesteuerte und eigengetriebene Positionierung sorgen. In einer anderen Variante können in den Fahrweg einschwenkbare Anschläge für die Längs- und Seitenpositionierung des LAM (6) und/oder Fördermittels (5) vorhanden sein. Eine Positioniereinrichtung (58) kann auch steuerungstechnisch über die programmierte Steuerung des Fördermittels (5) und dessen integrierte Wegmessung bzw. Navigation gebildet werden.

Die Fertigungsgeräte (28,29) können gleich oder unterschiedlich ausgebildet und jeweils einzeln oder mehrfach vorhanden sein. Zumindest ein Fertigungsgerät (29) dient zur Bearbeitung eines Werkstücks (2) an der Arbeitsstelle (26), insbesondere auf dem LAM (6). Das Fertigungsgerät (29) kann zusätzlich auch ein Werkstück (2) handhaben. Vorzugsweise wird ein anderes zusätzliches Fertigungsgerät (28) zum Handhaben eines Werkstücks (2) eingesetzt.

Die Fertigungsgeräte (28,29) sind um die Arbeitsstelle (26) verteilt angeordnet. Insbesondere befinden sie sich zu beiden Seiten der Arbeitsstelle (26) und des Förderwegs (7). Die Fertigungsgeräte (28,29) können stationär oder mittels einer Zusatzachse verfahrbar angeordnet sein. Die applikationsflexiblen Fertigungsgeräte (28,29) sind vorzugsweise als mehrachsige und programmierbare Industrieroboter ausgebildet. Sie weisen an ihren Abtriebselementen, insbesondere ihren Handflanschen, eine automatische Wechselkupplung auf. Sie können hierdurch automatisch das benötigte Werkzeug (8) aufnehmen, benutzen und bedarfsweise automatisch abgeben und wechseln. Alternativ kann ein Fertigungsgerät (29) in anderer Weise, z.B. als Werkzeugmaschine ausgebildet sein.

Die applikationsflexiblen Fertigungsgeräte (28,29) sind für verschiedene Aufgaben vorgesehen. Die Fertigungsgeräte (29) weisen z.B. austauschbare applikationsspezifische Werkzeuge (8) für die Durchführung des jeweiligen Fertigungsprozesses auf, die z.B. als Fügewerkzeug, Umformwerkzeug oder dgl. ausgebildet sind. Diese Fertigungsgeräte (29) sind z.B. als Schweissroboter ausgebildet.

Die anderen Fertigungsgeräte (28) tragen ebenfalls austauschbare applikationsspezifische Werkzeuge (8), die z.B. zum Handhaben der ein oder mehreren Werkstücke (2) beim Fertigungsprozess ausgebildet sind. Diese Werkzeuge (8) können Greifwerkzeuge sein. Die Fertigungsgeräte (28) sind z.B. als Handlingroboter ausgebildet.

In der bevorzugten und in Figur 3 gezeigten Konfiguration sind sechs Fertigungsgeräte (28,29) vorhanden, die beidseits der Arbeitsstelle (26) verteilt angeordnet sind. Hierbei sind zwei Fertigungsgeräte (29) bzw. Schweissroboter zentral und beidseits der Arbeitsstelle (26) angeordnet. Sie werden von vier Bearbeitungsgeräten (28) bzw. Handlingrobotern in beidseitiger Anordnung flankiert.

Die Fertigungseinrichtung (18-22), insbesondere die Fertigungszelle (23), weist einen oder mehrere Speicher (27) für die besagten Werkzeuge (8) auf. Die Speicher (27) können mehrere Aufnahmeplätze für verschiedene Werkzeuge (8) aufweisen. Sie können angetrieben und steuerbar sein. Sie können z.B. als Drehspeicher ausgeführt sein. Die Speicher (27) befinden sich jeweils im Arbeitsbereich eines Fertigungsgeräts (28,29). Im gezeigten Ausführungsbeispiel sind vier Speicher (27) an den Eckbereichen angeordnet, die jeweils einem Fertigungsgerät (28) bzw. Handlingroboter, zugeordnet sind.

Die Fertigungseinrichtung (18-22), insbesondere die Fertigungszelle (23) kann ferner eine oder mehrere Steuereinheiten, Versorgungseinrichtungen für Betriebsmittel, insbesondere elektrischen Strom, fluidische Medien oder dgl., sowie Hilfsvorrichtungen aufweisen.

Die Fertigungseinrichtung (18-22), insbesondere eine Steuereinheit, kann ein Speichermittel für eine Vielzahl von applikationsspezifischen und auf verschiedene LAM-Typen (A,B,C,D) adaptierten Steuerprogrammen aufweisen. Die Fertigungseinrichtung (18-22) hat außerdem eine Erfassungsvorrichtung für eine Typenkennung der LAM (6). Anhand der erfassten Typenkennung kann die besagte typ- und applikationsspezifische Umprogrammierung erfolgen.

Ferner kann eine umgebende Schutzabtrennung (24), z.B. in Form eines Zaunes, vorhanden sein. In der Schutzabtrennung (24) können eine oder mehrere Schleusen (25) für den gesicherten Einlass und Auslass eines Fördermittels (5) mit LAM (6) auf dem Förderweg (7) vorhanden sein.

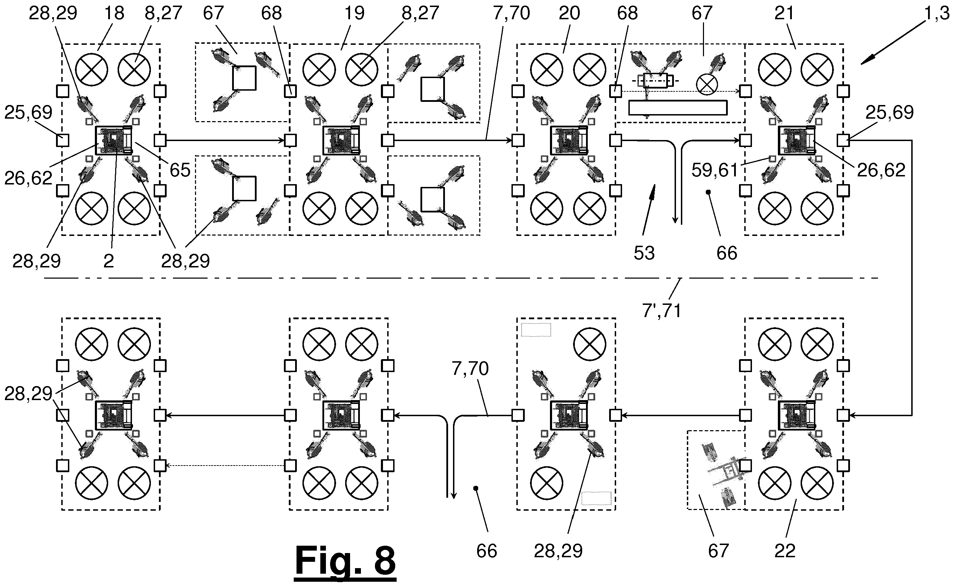

Wie Figur 8 verdeutlicht, können ein oder mehrere applikationsflexible Fertigungseinrichtungen (18-22) mit einer weiteren Fertigungseinrichtung (67) für einen Sekundärprozess an einem Werkstück (2) verbunden sein. Hierbei ist auch eine Mehrfachanordnung von solchen Fertigungseinrichtungen (67) möglich. Diese können seitlich neben oder auch oberhalb oder unterhalb einer Fertigungseinrichtung (18-22) angeordnet sein. In einer weiteren Fertigungseinrichtung (67) können ein oder mehrere programmgesteuerte Fertigungsmittel, insbesondere Industrieroboter, zum Handhaben und und Bearbeiten der Werkstücke (2) sowie weitere Vorrichtungen, z.B. stationäre Schweißzangen, Bolzensetzgeräte, Auftragegeräte für Klebstoff etc., angeordnet sein.

Der oder die in einer applikationsspezifischen Fertigungsstation (18-22) durchgeführten Primärprozess(e) sind vorzugsweise geometrie-spezifisch für das erwähnte Fertigungs-Produkt. Solche Prozesse können z.B. in einem Assemblieren, und in einem Fügen bestehen. Ein Fügeprozess kann durch Kleben (sogenannter Preprozess) oder einem geometriebestimmenden Punktschweißen oder Laserschweißen oder in einem Nieten oder Clinchen oder dgl. bestehen. Die ein oder mehreren Sekundärprozesse in einer weiteren Fertigungseinrichtung (67) können geometrie-unspezifisch sein. Sie können z.B. ein Fügen, Messen, formgebendes Bearbeiten, Schneiden oder dgl. umfassen. Bei einem Fügen können auch Zusatzteile, z.B. Bolzen oder dgl. angebracht werden. Ferner sind hard-codierte Sekundärprozesse möglich, die z.B. aus einem Lochen, Falzen, Bohren und/oder Fräsen oder dgl. bestehen.

Der Werkstückwechsel zwischen der applikationsspezifischen Fertigungseinrichtung (18-22) oder den ein oder mehreren weiteren Fertigungseinrichtungen (67) kann durch eine Schnittstelle (68) erfolgen, die z.B. an einem Durchlass einer Schutzabtrennung (24) angeordnet ist. Die weiteren Fertigungsbereiche (67) können ebenfalls von einer Schutzabtrennung (24) umgeben sein. Der Werkstückwechsel kann von einem programmgesteuerten Fertigungsmittel (28) insbesondere einem Handlingroboter, durchgeführt werden. Weitere Schnittstellen (69) können am Einlass und am bevorzugt gegenüber liegenden Auslass der Fertigungseinrichtung (18-22) angeordnet und z.B. von den Schleusen (25) gebildet werden.

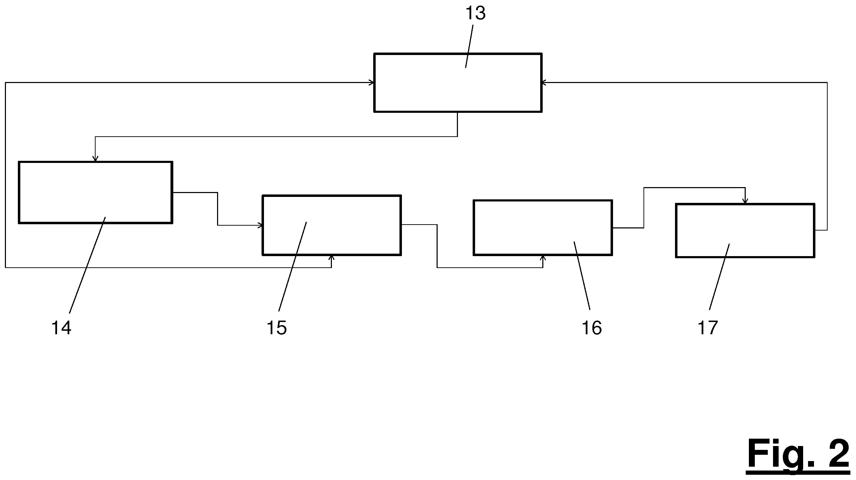

Die Fertigungsanlage (1) weist eine Steuerung (13) auf, die mit Steuereinheiten (14-17) für die Fertigungseinrichtungen (18-22), die Fördereinrichtung (4) und die Bereitstellungen (9,10,11) verbunden ist. Figur 2 zeigt beispielhaft eine solche Steuerungsarchitektur. Die zentrale Anlagensteuerung (13) ist einerseits mit einer Steuereinheit (14), einem sog. Warehouse-Manager, für das Warehouse (10) und die Fertigungseinrichtung (18-22) sowie gegebenenfalls auch die Fördereinrichtung (4) verbunden.

Der Warehouse-Manager beinhaltet ein Lagerverwaltungssystem für die Steuerung von Logistikprozessen vom Wareneingang zum Warenausgang, für die Bestandverwaltung und Inventur, für das Task-Management, für eine Transaktions-Historie, für eine Lager-Konfigurationsanpassung durch Administratoren und für Schnittstellen zu Systemkomponenten der Fertigungsanlage (1). Ferner beinhaltet der Warehouse-Manager (14) ein Materialflusssystem mit globaler Steuerung der automatisierten Anlagenkomponenten, insbesondere der Fertigungseinrichtungen (18-22) und der Fördereinrichtung (4), für die Transportverwaltung, für eine Stau- und Flusskontrolle, für ein Routing und Durchsatzoptimierungen, für eine integrierte Störungsbehebung über alle Levels, für eine Koordination mit Subsystemen, für eine Anlagenindividualisierung und für eine globale Materialflussoptimierung.

Ferner gibt es eine Verbindung zwischen der Steuerung (13) und einer Steuereinheit (15), die als Toolstore-Manager bezeichnet wird. Es besteht auch eine Verbindung zwischen dem Warehouse-Manager (14) und dem Toolstore-Manager (15). Der Toolstore-Manager (15) befasst sich mit dem Toolstore (11). Er beinhaltet einen Werkzeugmanager für Logistikprozesse von Werkzeugeingang zu Werkzeugemission, für die Kommissionierung der Werkzeuge für geplante Produktionen, für eine Verwaltung von Lagerorten und Einsatzorten, für ein Controlling und eine Dokumentation von Wartungsintervallen und für eine Historie aller Werkzeuge. Ferner werden die Ersatzteile hinsichtlich einer Bestandsverwaltung und Inventur gesteuert. Entsprechendes gilt auch für die Verbrauchsteile, sog. consumables und für eine Werkstatt.

Der Toolstore-Manager (15) ist mit einer Steuereinheit (16), dem sog. Fleet-Manager, verbunden. Dieser beinhaltet Schnittstellen zum Logistik- und Materialflusssystem und betrifft die Funktionen von Disposition, Planung und Flotten-Management der Fördermittel (5). Ferner hat auch der Warehouse-Manager (14) eine Verbindung zum Fleet-Manager (16). Der Fleet-Manager (16) führt Aufträge sowohl vom Warehouse-Manager (14), als auch vom Toolstore-Manager (15) aus.

Der Fleet-Manager (16) ist verbunden mit einer weiteren Steuereinheit (17), die als Field-Manager bezeichnet wird. Dieser befasst sich mit der Statuskontrolle für Abläufe in der Fertigungsanlage (1), Schnittstellen zur Hallen- und Gebäudetechnik sowie Schnittstellen zur Qualitätssicherung. Der Field-Manager (17) ist seinerseits mit der Steuerung (13) verbunden.

Die vorgenannten Verbindungen zwischen der Steuerung (13) und den Steuereinheiten (14-17) sind als Signalleitungen ausgebildet. Sie können kabelgebunden oder kabellos ausgeführt sein.

Die Fertigungsanlage (1) mit dem Fertigungsbereich (3) und den Bereitstellungen (9-12) sowie der Fördereinrichtung (4) kann beliebig konfiguriert werden. Hierbei können verschiedene Werkstücke (2) im Parallelbetrieb gefertigt werden. Dies kann z.B. die parallele Fertigung von linken und rechten Seitenwänden, eines Karosseriedachs, einer Bodengruppe oder dergleichen sein. Entsprechendes gilt auch für andere Arten von Werkstücken (2), die nicht als Karosseriebauteile ausgebildet sind. Ferner können innerhalb dieser parallelen Fertigungsvorgänge verschiedene Typen in freiem Mix gefertigt werden,

Die Fertigungseinrichtungen (18-22) können allesamt unterschiedliche Fertigungsschritte ausführen. Hierbei kann z.B. für jeden werkstückbezogenen Fertigungsschritt eine eigene Fertigungseinrichtung (18-22) vorhanden sein. Ferner ist es möglich, einen Fertigungsschritt für ein bestimmtes Werkstück (2) in zwei oder mehr funktionsgleichen Fertigungseinrichtungen (18-22) parallel auszuführen. Dies kann z.B. zum Ausgleich unterschiedlich langer Taktzeiten für verschiedene Fertigungsschritte sinnvoll sein. Ferner ist es möglich, Fertigungskapazitäten und die Zahl der dabei eingebundenen Fertigungseinrichtungen (18-22) zu verkleinern oder zu vergrößern.

Durch die schnelle applikationsspezifische Adaption der Fertigungsanlage (1) und insbesondere der Fertigungseinrichtungen (18-22) können die einzelnen applikationsbezogenen Fertigungsjobs der Fertigungseinrichtungen (18-22) flexibel und schnell geändert werden. Die hierfür erforderliche werkzeugtechnische Umrüstung sowie Umprogrammierung und die hierdurch bewirkte applikationsspezifische Adaption der Fertigungseinrichtungen (18-22) kann ebenfalls sehr schnell vonstatten gehen. Entsprechend schnell kann auch die Fördereinrichtung (4) mit ihren Förderbahnen schnell geändert und umprogrammiert werden.

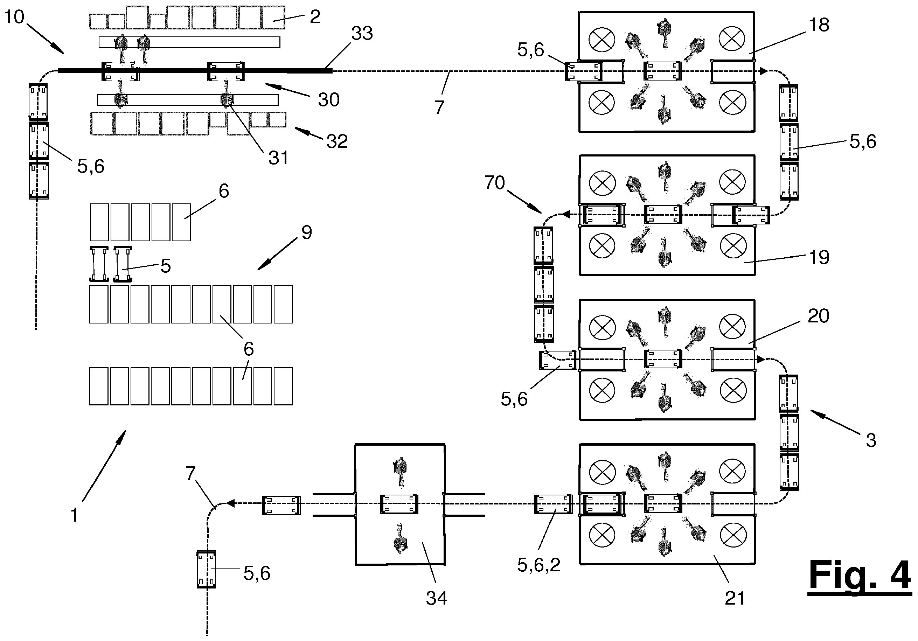

Figur 4 verdeutlicht eine beispielhafte Konfiguration einer Fertigungsanlage (1) mit einem Fertigungsbereich (3), in dem vier Fertigungseinrichtungen (18-21) in einer Reihe angeordnet sind und von einem mäandrierenden Förderweg (7) nacheinander durchsetzt werden. Die Fertigungseinrichtungen (18-21) können entsprechend Figur 3 ausgebildet sein. Nach Durchlaufen der letzten Fertigungseinrichtung (21) kann das Fördermittel (5) mit dem LAM (6) und dem gefertigten Werkstück (2) in einen Abgabebereich (34) fahren, an dem das Werkstück (2) mit Robotern oder dgl. entladen und aus diesem Teil der Fertigungsanlage (1) ausgeschleust werden kann. Es kann z.B. in ein Zwischenlager verbracht oder direkt in einen weiteren Fertigungsbereich (3) zugeführt werden.

Figur 4 verdeutlicht auch das dem Fertigungsbereich (3) vorgeschaltete Warehouse (10), in dem die Fördermittel (5) mit LAM (6) mit ein oder mehreren Werkstücken (2) beladen werden und anschließend in den Fertigungsbereich (3) einfahren. Zudem sind eine Bereitstellung (9) für LAM (6) und eine Bereitstellung (12) für Fördermittel (5) vorgeschaltet und über einen Förderweg (7) an das Warehouse (10) und den Fertigungsbereich (3) angeschlossen.

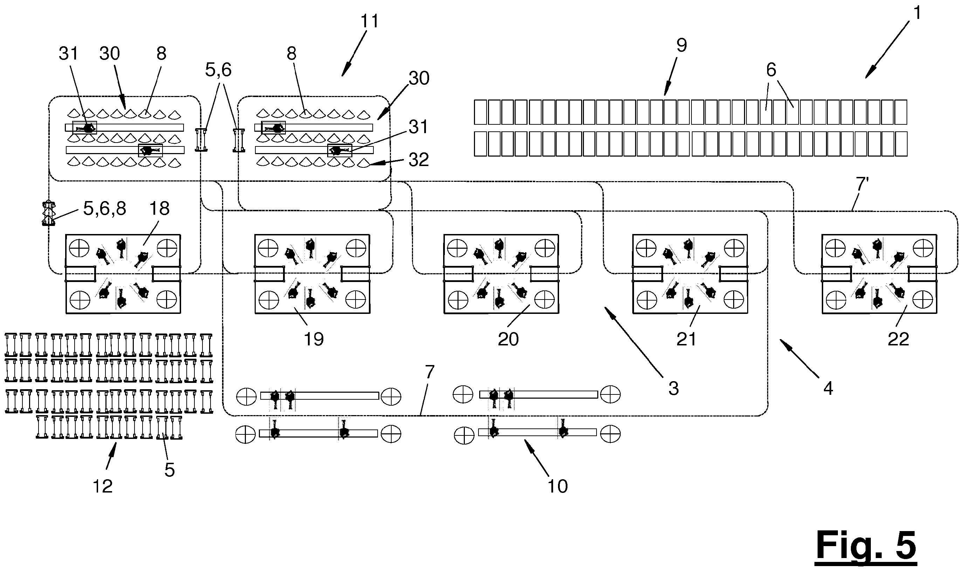

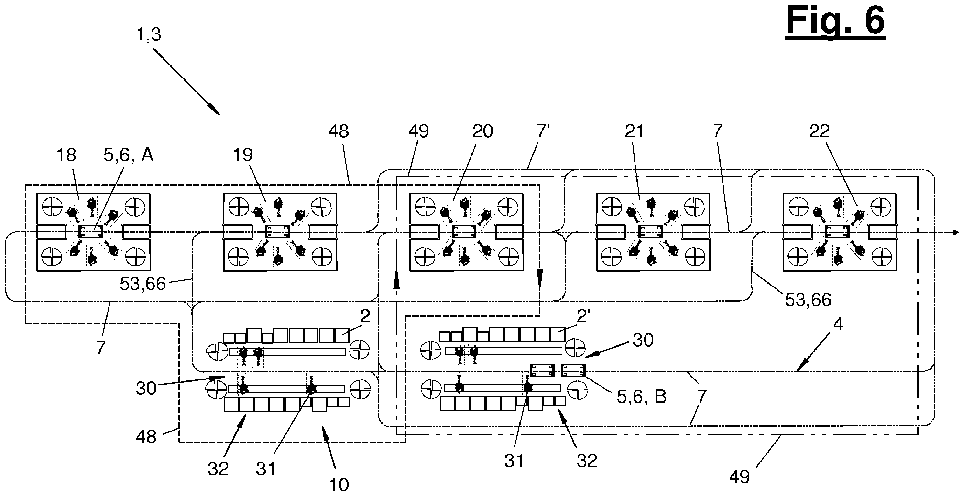

Figur 5 und 6 zeigen beispielhaft eine andere Konfiguration der Fertigungsanlage (1) mit einem Fertigungsbereich (3), der eine Reihe von fünf Fertigungseinrichtungen (18-22) aufweist. Figur 5 verdeutlicht hierbei die applikationsspezifische Vorbereitung und Rüstung des Fertigungsbereichs (3).

Die Fördermittel (5) aus einer Bereitstellung (12) werden zunächst mit geeigneten LAM (6) beladen und fahren dann in einen Tool-Store (11), welcher ein oder mehrere Beladebereiche (30) aufweisen kann. Hier werden die benötigten applikationsspezifischen Werkzeuge (8) auf die Fördermittel (5) und LAM (6) geladen, die anschließend auf programmierten Förderbahnen in die jeweiligen Fertigungseinrichtungen (18-22) einfahren und dort die Werkzeuge (8) an die Fertigungsgeräte (28,29) und ggf. die Speicher (27) übergeben. Zudem erfolgt eine Umprogrammierung in der Steuereinheit der jeweiligen Fertigungseinrichtung (18-22). Die Rüstung kann im Parallelbetrieb erfolgen.

Das Entladen der Werkzeuge (8) kann in den Fertigungseinrichtungen (18,22) durch die dortigen Fertigungsgeräte (28,29) erfolgen, wobei im Wechsel die nicht mehr benötigten Werkzeuge (8) an das Fördermittel (5) und das LAM (6) übergeben werden.

In einer anderen und nicht dargestellten Variante kann für die Werkzeugbestückung auf dem Fördermittel (5) und/oder dem LAM (6) eine Handlingeinrichtung angeordnet sein, die den Werkzeugwechsel und die Neubestückung mit Werkzeugen (8) ausführt. Diese Handlingeinrichtung kann z.B. ein mehrachsiger Handlingroboter sein. Hiermit können Werkzeuge (8) und/oder andere Vorrichtungen ausserhalb des Förder- oder Durchfahrtswegs (7) platziert werden.

Nach erfolgter applikationsspezifischer Umrüstung oder Ausrüstung des Fertigungsbereichs (3) kann das Fertigungsverfahren beginnen. Figur 6 verdeutlicht dieses Stadium. In dem Netz von Förderwegen (7) ändern sich dabei die jeweiligen programmierten Förderbahnen der Fördermittel (5). In Figur 5 und 6 werden mit der Bezugsziffer 7 dabei die besagten programmierten Förderbahnen auf den vorhandenen Förderwegen bezeichnet.

Über die Fördereinrichtung (4) ist ein Warehouse (10) an den Fertigungsbereich (3) angeschlossen, welches ebenfalls zwei oder mehr Beladebereiche (30) aufweisen kann. Hierbei können entsprechend des Fertigungsverfahrens unterschiedliche Werkstücke (2) zu den verschiedenen Fertigungseinrichtungen (18-22) transportiert werden. Die Fertigungseinrichtungen (18-22) können wieder gemäß Figur 3 ausgebildet sein.

Ein Fördermittel (5) mit LAM (6) und einem z.B. als Teilesatz ausgebildeten Werkstück (2) fährt vom linken Beladebereich (3) in Figur 6 in die erste Fertigungseinrichtung (18) ein. Die Fertigungsgeräte (28) bzw. Handlingroboter entnehmen mit geeigneten Werkzeugen (8), insbesondere Geogreifern, die Werkstückteile vom LAM (6). Hierbei können die Fertigungsgeräte (28) miteinander kooperieren und mit ihren Geogreifern sich bedarfsweise gegenseitig verriegeln und die gegriffenen und gespannten Werkstückteile den ein oder mehreren Fertigungsgeräten (29), insbesondere Schweissrobotern, zum Fügen präsentieren. Hierbei findet z.B. ein Laserschweissen mit einem Remote-Laser an den gegriffenen Werkstückteilen statt.

Bedarfsweise werden verriegelte Geogreifer im Verbund in weitere Arbeitspositionen gebracht. Ferner können bei Bedarf ein oder mehrere weitere Werkstückteile von ein oder mehreren Fertigungsgeräten (28) vom LAM (6) nachgeladen und den bereits gegriffenen Werkstückteilen zugefügt werden.

Nach dem Fügevorgang wird das produzierte Werkstück auf das Fördermittel (5) und/oder den LAM (6) zurück gelegt und anschließend aus der Fertigungseinrichtung (18) abtransportiert. Alternativ kann während des Fertigungsprozesses das Werkstück (2) insgesamt abgehoben werden, wobei das Fördermittel (5) mit dem LAM (6) die Fertigungseinrichtung (18) verlässt und ein neues Fördermittel (5) mit einem LAM (6) in die Fertigungseinrichtung (18) einfährt, wobei hier das fertig produzierte Werkstück (2) anschließend abgelegt wird. Bei diesem Wechsel kann das produzierte Werkstück (2) mit weiteren Werkstücken oder Werkstückteilen ergänzt werden, die auf dem neuen LAM (6) zugeführt werden. Die assemblierte Werkstückkonfiguration kann dann in die nächste Fertigungseinrichtung (19) gefahren werden. Entsprechend Fertigungsprozesse und Werkstückzuführungen können auch in den weiteren Fertigungsschritten und Fertigungseinrichtungen (20-22) erfolgen.

Ferner ist es möglich, dass ein Fördermittel (5) mit LAM (6) und einem in einem Fertigungsschritt produzierten Werkstück (2) aus einer Fertigungseinrichtung (18) zunächst zum Warehouse (10) zurück gefahren und dort mit weiteren Werkstücken oder Werkstückteilen ergänzt wird sowie anschließend in die nächste Fertigungseinrichtung (19) einfährt. Entsprechende Vorgänge können sich auch bei den weiteren Fertigungsschritten und Fertigungseinrichtungen (20-22) anschliessen.

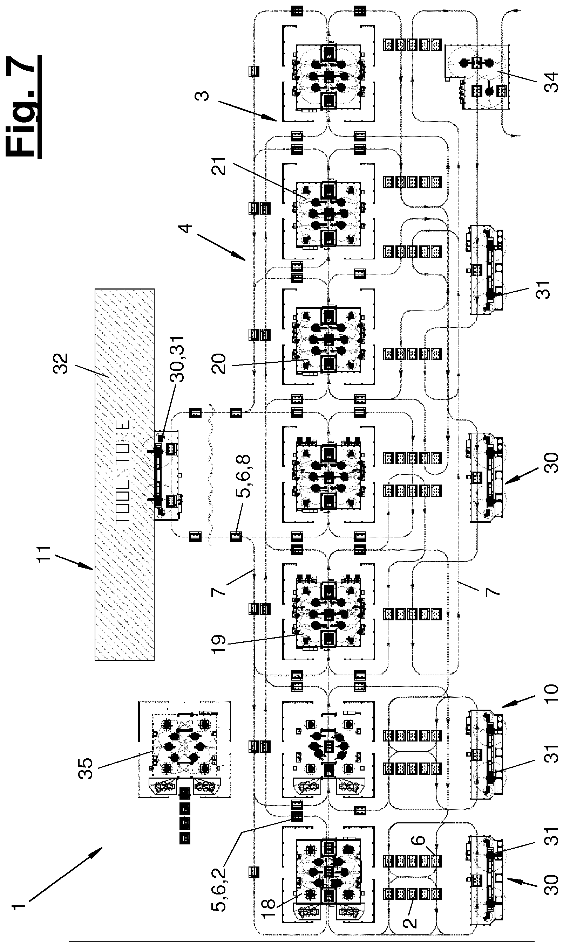

Figur 7 zeigt eine weitere komplexere Konfiguration einer Fertigungsanlage (1) mit einem Fertigungsbereich (3) der vorbeschriebenen Art, einem Warehouse (10) und einem Toolstore (11). Die anderen Bereitstellungen (9,12) sind der Übersicht halber nicht dargestellt. Das Warehouse (10) und der Toolstore (11) können auf gegenüber liegenden Seiten des Fertigungsbereichs (3) angeordnet sein, indem sich z.B. eine einzelne Reihe von Fertigungseinrichtungen (18-21) befindet. Eine solche Anordnung hat den Vorteil, dass die Förderwege (7) und die programmierten Förderbahnen für den Werkzeugtausch und für die Werkstückzuführung entflochten werden können. Außerdem ist eine Variante dargestellt, in der den verschiedenen Beladebereichen (30) des Warehouse (10) Pufferspeicher für lose LAM (6) mit vorbereiteten Werkstückkonfigurationen (2) zugeordnet sind. Die für den Werkstücktransport von und zu den Fertigungseinrichtungen (18-21) benutzten Fördermittel (5) laden dann nur die vorbereiteten LAM (6) auf, wobei andere Fördermittel (5) für die Bestückung des Pufferspeichers zuständig sind. Dies sorgt für besonders schnelle Wechsel- und Bestückungszeiten.

Ein Fertigungsbereich (3) kann außer den vorgenannten Arten von applikationsflexiblen Fertigungseinrichtungen (18-22) auch eine oder mehrere andere Fertigungseinrichtungen (35) aufweisen, die z.B. eine vorgegebene Werkzeugbestückung und einen vorgegebenen Fertigungsschritt beinhalten, der nicht oder nur begrenzt flexibel ist. In Figur 7 ist die Fertigungseinrichtung (35) in dieser Weise ausgebildet. Sie kann z.B. als Geostation oder Framingstation für Fahrzeugkarosserien ausgebildet sein und eine Paarung von Spannrahmen aufweisen, die gegebenenfalls mehrfach und vor Ort wechselbar vorhanden ist.

Solche nicht oder weniger flexiblen Fertigungseinrichtungen (35) können z.B. für besonders große und schwere Werkstücke oder Werkstückkonfigurationen vorgesehen sein. Sie können ansonsten die gleichen Eigenschaften wie die applikationsflexiblen Fertigungseinrichtungen (18-22) haben, insbesondere applikationsflexible Fertigungsgeräte (28,29), Speicher (27) etc.. Sie können ferner ebenfalls an die Fördereinrichtung (4) angeschlossen sein und auch einen durchgehenden Förderweg (7) besitzen.

### BEZUGSZEICHENLISTE

- 1: Fertigungsanlage
- 2: Werkstück, Karosseriebauteil
- 3: Fertigungsbereich
- 4: Fördereinrichtung, Fleet
- 5: Fördermittel, AGV
- 6: Lastaufnahmemittel LAM
- 7: Förderweg
- 7': Förderweg
- 8: applikationsspezifisches Werkzeug
- 9: Bereitstellung für Lastaufnahmemittel LAM
- 10: Bereitstellung für Werkstücke, Warehouse
- 11: Bereitstellung für Werkzeuge, Toolstore
- 12: Bereitstellung für Fördermittel
- 13: Steuerung
- 14: Steuereinheit, Warehouse-Manager
- 15: Steuereinheit, Toolstore-Manager
- 16: Steuereinheit, Fleet-Manager
- 17: Steuereinheit, Field-Manager
- 18: Fertigungseinrichtung
- 19: Fertigungseinrichtung
- 20: Fertigungseinrichtung
- 21: Fertigungseinrichtung
- 22: Fertigungseinrichtung
- 23: Fertigungszelle, Primärprozess
- 24: Schutzabtrennung
- 25: Schleuse
- 26: Arbeitsstelle
- 27: Speicher, Drehspeicher
- 28: Fertigungsgerät, Roboter, Handlingroboter
- 29: Fertigungsgerät, Roboter, Schweißroboter
- 30: Beladebereich
- 31: Beladeeinrichtung, Laderoboter
- 32: Lagerbereich
- 33: Energieversorgungseinrichtung, Energieladestrecke
- 34: Abgabebereich
- 35: Fertigungseinrichtung
- 36:
- 37:
- 38:
- 39:
- 40:
- 41:
- 42:
- 43:
- 44:
- 45:
- 46:
- 47:
- 48: Fertigungs-Loop, Typ A
- 49: Fertigungs-Loop, Typ B
- 50:
- 51:
- 52:
- 53: Parkbereich
- 54:
- 55:
- 56:
- 57:
- 58: Positioniereinrichtung LAM
- 59:
- 60:
- 61:
- 62:
- 63:
- 64:
- 65:
- 66: Zufahrtskorridor
- 67: Fertigungseinrichtung Sekundärprozess
- 68: Schnittstelle
- 69: Schnittstelle
- 70: Förderlinie
- 71: Förderlinie
- 72: Logistikbereich

- A: Typ LAM
- B: Typ LAM
- C: Typ LAM
- D: Typ LAM

## Patentansprüche

1. Fertigungsanlage für Werkstücke (2), insbesondere Karosseriebauteile, wobei die Fertigungsanlage (1) einen Fertigungsbereich (3) mit mehreren automatischen, programmgesteuerten Fertigungseinrichtungen (18-22) und eine Bereitstellung (10) für Werkstücke (2) aufweist, wobei die Fertigungsanlage (1) eine Bereitstellung (11) für verschiedene applikationsspezifische Werkzeuge (8) und eine Fördereinrichtung (4) aufweist, **dadurch gekennzeichnet, dass** die Fördereinrichtung (4) die Fertigungseinrichtungen (18-22) untereinander und mit den externen Bereitstellungen (10,11) flexibel verbindet, wobei die Fördereinrichtung (4) ein Netz von Förderwegen (7) und eine Vielzahl von individuell steuerbaren Fördermitteln (5) aufweist, die im Netz der Förderwege (7) auf frei programmierbaren Förderbahnen verkehren, wobei ein Förderweg (7) sich in und bevorzugt durch eine Fertigungseinrichtung (18-22) erstreckt.

2. Fertigungsanlage nach Anspruch 1, **dadurch gekennzeichnet, dass** die Fertigungseinrichtungen (18-22) applikationsflexibel ausgebildet sind und von der Fördereinrichtung (4) mit Werkstücken (2) und applikationsspezifischen Werkzeugen (8) versorgt werden und durch eine automatische wechselbare Bestückung mit verschiedenen applikationsspezifischen Werkzeugen (8) sowie eine Programmänderung an unterschiedliche Fertigungsprozesse und Applikationen adaptierbar sind.

3. Fertigungsanlage nach Anspruch 1 oder 2, **dadurch gekennzeichnet, dass** die Fördermittel (5) als autonome, flurgebundene fahrerlose Transportfahrzeuge (AGV oder FTF) ausgebildet sind.

4. Fertigungsanlage nach einem der vorhergehenden Ansprüche, **dadurch gekennzeichnet, dass** mehrere aufgereihte Fertigungseinrichtungen (18-22) untereinander durch einen gemeinsamen, durchgängigen Förderweg (7) direkt miteinander verbunden sind.

5. Fertigungsanlage nach einem der vorhergehenden Ansprüche, **dadurch gekennzeichnet, dass** die Fertigungsanlage (1) mehrere unterschiedliche Typen (A,B,C,D) von Lastaufnahmemitteln (6) aufweist, die an verschiedene Typen von Werkstücken (2) und/oder applikationsspezifischen Werkzeugen (8) adaptiert sind.

6. Fertigungsanlage nach Anspruch 5, **dadurch gekennzeichnet, dass** die Fördermittel (5) zum Transport von adaptierten Lastaufnahmemitteln (6) ausgebildet sind, wobei ein Lastaufnahmemittel (6) fest oder wechselbar auf einem Fördermittel (5) angeordnet ist.

7. Fertigungsanlage nach einem der vorhergehenden Ansprüche, **dadurch gekennzeichnet, dass** zumindest mehrere Fertigungseinrichtungen (18-22) untereinander gleich und zellenartig (23) ausgebildet sind.

8. Fertigungsanlage nach einem der vorhergehenden Ansprüche, **dadurch gekennzeichnet, dass** eine Fertigungseinrichtung (18-22) mehrere um eine Arbeitsstelle (26) verteilt angeordnete applikationsflexible Fertigungsgeräte (28,29), insbesondere Roboter, aufweist.

9. Fertigungsanlage nach Anspruch 8, **dadurch gekennzeichnet, dass** der Förderweg sich durch die Arbeitsstelle (26) erstreckt.

10. Fertigungsanlage nach Anspruch 8 oder 9, **dadurch gekennzeichnet, dass** eine Fertigungseinrichtung (18-22) eine Positioniereinrichtung (58) für ein Fördermittel (5) und/oder ein Lastaufnahmemittel (6) an der Arbeitsstelle (26) aufweist.

11. Fertigungsanlage nach einem der vorhergehenden Ansprüche, **dadurch gekennzeichnet, dass** eine Fertigungseinrichtung (18-22) für einen Primärprozess mit einer weiteren Fertigungseinrichtung (67) für einen Sekundärprozess an einem Werkstück (2) verbunden ist.

12. Fertigungsanlage nach einem der vorhergehenden Ansprüche, **dadurch gekennzeichnet, dass** die Fertigungsanlage (1) eine Steuerung (13) aufweist, die mit Steuereinheiten (14-17) für die Fertigungseinrichtungen (18-22), die Fördereinrichtung (4) und die Bereitstellungen (9,10,11) verbunden ist.

13. Verfahren zum Fertigen von Werkstücken (2), insbesondere Karosseriebauteilen, in einer Fertigungsanlage (1), die einen Fertigungsbereich (3) mit mehreren automatischen, programmgesteuerten Fertigungseinrichtungen (18-22) und eine Bereitstellung (10) für Werkstücke (2) aufweist, wobei verschiedene applikationsspezifische Werkzeuge (8) in einer Bereitstellung (11) der Fertigungsanlage (1) bereit gestellt werden, **dadurch gekennzeichnet, dass** die Fertigungseinrichtungen (18-22) untereinander und mit den externen Bereitstellungen (10,11) durch eine Fördereinrichtung (4) flexibel verbunden werden, wobei die Werkstücke (2) und/oder die applikationsspezifischen Werkzeuge (8) von individuell steuerbaren Fördermitteln (5) der Fördereinrichtung (4) auf einem Netz von Förderwegen (7) transportiert werden, wobei die Fördermittel (5) auf frei programmierbaren Förderbahnen verkehren, wobei ein Förderweg (7) sich in und bevorzugt durch eine Fertigungseinrichtung (18-22) erstreckt.

14. Verfahren nach Anspruch 13, **dadurch gekennzeichnet, dass** die Fertigungseinrichtungen (18-22) applikationsflexibel ausgebildet sind und von der Fördereinrichtung (4) mit Werkstücken (2) und applikationsspezifischen Werkzeugen (8) versorgt werden und durch eine automatische wechselbare Bestückung mit verschiedenen applikationsspezifischen Werkzeugen (8) sowie eine Programmänderung an unterschiedliche Fertigungsprozesse und Applikationen adaptiert werden, wobei die Werkstücke (2) und/oder die applikationsspezifischen Werkzeuge (8) mittels adaptierten und bevorzugt typverschiedenen Lastaufnahmemitteln (6) auf Fördermitteln (5) der Fördereinrichtung (4) transportiert werden.

15. Verfahren nach Anspruch 13 oder 14, **dadurch gekennzeichnet, dass** in einer Fertigungseinrichtung (18-22) ein Primärprozess und in einer damit verbundenen weiteren Fertigungseinrichtung (67) ein Sekundärprozess an einem Werkstück (2) durchgeführt wird.

## Claims

1. Production plant for workpieces (2), in particular bodywork components, wherein the production plant (1) has a production zone (3) with a plurality of automatic, programme-controlled production devices (18, 22) and also has a supply station (10) for workpieces (2), wherein the production plant (1) has a supply station (11) for various application-specific tools (8) and also a conveyor (4), **characterized in that** the conveyor (4) connects the production devices (18-22) to one another and to the external supply stations (10, 11) in a flexible manner, wherein the conveyor (4) has a network of conveying paths (7) and a multiplicity of individually controllable conveying means (5), which travel over freely programmable conveying tracks in the network of conveying paths (7), wherein a conveying path (7) extends into, and preferably through, a production device (18-22).

2. Production plant according to Claim 1, **characterized in that** the production devices (18-22) are designed to be flexible in application and are supplied with workpieces (2) and application-specific tools (8) by the conveyor (4) and can be adapted to different production processes and applications by being automatically and interchangeably fitted with various application-specific tools (8) and by a change in programme.

3. Production plant according to Claim 1 or 2, **characterized in that** the conveying means (5) are designed in the form of autonomous, floor-bound automated guided vehicles (AGV).

4. Production plant according to one of the preceding claims, **characterized in that** a plurality of production devices (18-22) in a row are connected directly to one another by a common, continuous conveying path (7).

5. Production plant according to one of the preceding claims, **characterized in that** the production plant (1) has a plurality of different types (A, B, C, D) of load-bearing means (6), which are adapted to various types of tools (2) and/or application-specific tools (8).

6. Production plant according to Claim 5, **characterized in that** the conveying means (5) are designed to transport adapted load-bearing means (6), wherein a load-bearing means (6) is arranged in a fixed or interchangeable manner on a conveying means (5).

7. Production plant according to one of the preceding claims, **characterized in that** at least a plurality of production devices (18-22) are designed to be identical to one another and cell-like (23).

8. Production plant according to one of the preceding claims, **characterized in that** a production device (18-22) has a plurality of production machines (28, 29) that are flexible in application, in particular robots, distributed around a workstation (26).

9. Production plant according to Claim 8, **characterized in that** the conveying path extends through the workstation (26).

10. Production plant according to Claim 8 or 9, **characterized in that** a production device (18-22) has a positioning device (58) for a conveying means (5) and/or a load-bearing means (6) at the workstation (26).

11. Production plant according to one of the preceding claims, **characterized in that** a production device (18-22) in which a workpiece (2) undergoes a primary process is connected to a further production device (67), in which a workpiece (2) undergoes a secondary process.

12. Production plant according to one of the preceding claims, **characterized in that** the production plant (1) has a control means (13), which is connected to control units (14-17) for the production devices (18-22), the conveyor (4) and the supply stations (9, 10, 11).

13. Method for producing workpieces (2), in particular bodywork components, in a production plant (1) which has a production zone (3) with a plurality of automatic, programme-controlled production devices (18-22) and also has a supply station (10) for workpieces (2), wherein various application-specific tools (8) are supplied in a supply station (11) of the production plant (1), **characterized in that** the production devices (18-22) are connected to one another and to the external supply stations (10, 11) in a flexible manner by a conveyor (4), wherein the workpieces (2) and/or the application-specific tools (8) are transported on a network of conveying paths (7) by individually controllable conveying means (5) of the conveyor (4), wherein the conveying means (5) travel over freely programmable conveying tracks, wherein a conveying path (7) extends into, and preferably through, a production device (18-22).

14. Method according to Claim 13, **characterized in that** the production devices (18-22) are designed to be flexible in application and are supplied with workpieces (2) and application-specific tools (8) by the conveyor (4) and are adapted to different production processes and applications by being automatically and interchangeably fitted with various application-specific tools (8) and by a change in programme, wherein the workpieces (2) and/or the application-specific tools (8) are transported on conveying means (5) of the conveyor (4) by preferably various types of adapted load-bearing means (6).

15. Method according to Claim 13 or 14, **characterized in that** a workpiece (2) undergoes a primary process in a production device (18-22) and undergoes a secondary process in a further production device (67), which is connected to the production device (18-22).

## Revendications

1. Installation de fabrication de pièces de fabrication (2), en particulier de pièces de carrosserie, dans laquelle l'installation de fabrication (1) comporte une zone de fabrication (3) dotée de plusieurs dispositifs de fabrication (18-22) automatiques programmables et un approvisionnement (10) pour les pièces de fabrication (2), dans laquelle l'installation de fabrication (1) comporte un approvisionnement (11) pour différents outils d'application spécifique (8) et un convoyeur (4), **caractérisée en ce que** le convoyeur (4) relie les dispositifs de fabrication (18-22) les uns aux autres et est relié de manière flexible aux approvisionnements externes (10, 11), dans laquelle le convoyeur (4) comporte un réseau de routes de convoyage (7) et une pluralité de moyens de convoyage (5) individuellement pilotables, qui se déplacent dans le réseau des routes de convoyage (7) sur des voies de convoyage librement programmables, dans laquelle une route de convoyage (7) s'étend dans et de préférence au travers d'un dispositif de fabrication (18-22).

2. Installation de fabrication selon la revendication 1, **caractérisée en ce que** les dispositifs de fabrication (18-22) sont conçus comme flexibles d'application et sont alimentés depuis le convoyeur (4) en pièces de fabrication (2) et en outils d'application spécifique (8) et sont adaptables par un montage automatiquement échangeable de différents outils d'application spécifique (8) ainsi qu'une modification de programme pour différents processus de fabrication et applications.

3. Installation de fabrication selon la revendication 1 ou 2, **caractérisée en ce que** les moyens de convoyage (5) sont conçus comme véhicules de transport au sol autonomes, sans conducteur (VGA).

4. Installation de fabrication selon l'une des revendications précédentes, **caractérisée en ce que** plusieurs dispositifs de fabrications (18-22) alignés les uns par rapport aux autres sont reliés directement l'un à l'autre par une route de convoyage (7) commune continue.

5. Installation de fabrication selon l'une des revendications précédentes, **caractérisée en ce que** l'installation de fabrication (1) comporte plusieurs types différents (A, B, C, D) de moyens de levage (6), adaptés aux différents types de pièces de fabrication (2) et/ou d'outils d'application spécifique (8).

6. Installation de fabrication selon la revendication 5, **caractérisée en ce que** les moyens de convoyage (5) sont conçus pour le transport de moyens de levage adaptés (6), dans laquelle un moyen de levage (6) est agencé de manière fixe ou interchangeable sur un moyen de convoyage (5).

7. Installation de fabrication selon l'une des revendications précédentes, **caractérisée en ce qu'**au moins plusieurs dispositifs de fabrication (18-22) sont conçus comme identiques les uns aux autres et sous forme de cellules (23).

8. Installation de fabrication selon l'une des revendications précédentes, **caractérisée en ce qu'**un dispositif de fabrication (18-22) comporte plusieurs appareils de fabrication (28, 29) flexibles d'application, en particulier des robots, agencés répartis autour d'un poste de travail (26).

9. Installation de fabrication selon la revendication 8, **caractérisée en ce que** la route de convoyage s'étend au travers du poste de travail (26).

10. Installation de fabrication selon la revendication 8 ou 9, **caractérisée en ce qu'**un dispositif de fabrication (18-22) comporte un dispositif de positionnement (58) pour un moyen de convoyage (5) et/ou un moyen de levage (6) sur le poste de travail (26) .

11. Installation de fabrication selon l'une des revendications précédentes, **caractérisée en ce qu'**un dispositif de fabrication (18-22) pour un processus primaire est relié à un dispositif de fabrication supplémentaire (67) pour un processus secondaire sur une pièce de fabrication (2).

12. Installation de fabrication selon l'une des revendications précédentes, **caractérisée en ce que** l'installation de fabrication (1) comporte une commande (13), laquelle est reliée à des unités de commande (14-17) pour les dispositifs de fabrication (18-22), le convoyeur et les approvisionnements (9, 10, 11).

13. Procédé de fabrication de pièces de fabrication (2), en particulier de pièces de carrosserie, dans une installation de fabrication (1), laquelle comporte une zone de fabrication (3) dotée de plusieurs dispositifs de fabrication (18-22) automatiques programmables et un approvisionnement (10) pour les pièces de fabrication (2), dans lequel différents outils d'application spécifique (8) sont approvisionnés dans un approvisionnement (11) de l'installation de fabrication (1), **caractérisé en ce que** les dispositifs de fabrication (18-22) sont reliés les uns aux autres et aux approvisionnements externes (10, 11) de manière flexible par un convoyeur (4), dans lequel les pièces de fabrication (2) et/ou les outils d'application spécifique (8) sont transportés par des moyens de convoyage (5) individuellement pilotables du convoyeur (4) sur un réseau de routes de convoyage (7), dans lequel les moyens de convoyage (5) se déplacent sur des voies de convoyage librement programmables, dans lequel une route de convoyage (7) s'étend dans et de préférence au travers d'un dispositif de fabrication (18-22) .

14. Procédé selon la revendication 13, **caractérisé en ce que** les dispositifs de fabrication (18-22) sont conçus comme flexibles d'application et sont alimentés depuis le convoyeur (4) en pièces de fabrication (2) et en outils d'application spécifique (8) et sont adaptés par un montage automatiquement échangeable de différents outils d'application spécifique (8) ainsi qu'une modification de programme pour différents processus de fabrication et applications, dans lequel les pièces de fabrication (2) et/ou les outils d'application spécifique (8) sont transportés sur des moyens de convoyage (5) du convoyeur (4) au moyen de moyens de levage (6) adaptés et de préférence différenciés par type.

15. Procédé selon la revendication 13 ou 14, **caractérisé en ce que** sont mis en oeuvre sur une pièce de fabrication (2) un processus primaire dans un dispositif de fabrication (18-22) et un processus secondaire dans un dispositif de fabrication supplémentaire (67) relié à celui-ci.
